Europäisches Patentamt

European Patent Office

Office européen des brevets

(11) Publication number: **0 478 033 A1**

# EUROPEAN PATENT APPLICATION

(21) Application number: **91202193.8**

(22) Date of filing: **28.08.91**

(51) Int. Cl.⁵: **B29C 67/14**, B29C 43/12

(30) Priority: **30.08.90 NL 9001907**

(43) Date of publication of application:
**01.04.92 Bulletin 92/14**

(84) Designated Contracting States:
**AT BE CH DE DK ES FR GB GR IT LI NL SE**

(71) Applicant: **DSM N.V.**
**Het Overloon 1**
**NL-6411 TE Heerlen(NL)**

(72) Inventor: **Bleichrodt, Frederik**
**Leerlooierstraat 6**
**NL-6151 DC Sittard(NL)**

(74) Representative: **den Hartog, Jeroen Hendrikus**
**Joseph et al**
**Octrooibureau DSM Postbus 9**
**NL-6160 MA Geleen(NL)**

(54) Process for making honeycomb sandwich panels.

(57) The invention relates to a process for making an aminoplast-impregnated sandwich panel consisting of a honeycomb (6) and facing by means of an autoclave (1), characterized in that at least one of the honeycomb (6) and facing (5) is impregnated with aminoplast and the sandwich panel is placed in an autoclave under a sheet of flexible material (7), which flexible material is at least partially gas tight and is sealed at its edges, over which flexible material a first pressure is applied and under which flexible material a second pressure is applied, that is lower than the first pressure whereby the second pressure is at least as high as the vapour pressure of water at the curing temperature of the aminoplast.

Honeycomb sandwich panels made by applying a process according to the invention are particularly suited for being used in applications with high demands imposed in respect of strength and rigidity in combination with high demands in respect of fire resistance. Examples are aircraft, house building, trains, automotive vehicles and ships.

FIG. 1

The invention relates to a process for making an aminoplast-impregnated sandwich panel consisting of a honeycomb and at least one facing by means of an autoclave, whereby at least one of the honeycomb and facing is impregnated with aminoplast and the sandwich panel is placed in an autoclave under a sheet of flexible material, which flexible material is at least partially gas tight and is sealed at its edges, over which flexible material a first pressure is applied and under which flexible material a second pressure is applied, that is lower than the first pressure.

Such a process is known from DE-A-3.631.185. In it the sandwich panel, consisting of a honeycomb structure with on both sides facings, is made in an autoclave according to the vacuum bag process. Such a process is described also in Engineered Materials Handbook, Volume 1, Composites, ASM International, Ohio. The vacuum bag process is defined therein on page 25 as a process in which a sheet of flexible transparant material with a bleeder cloth and a release film is placed over a lay-up and sealed at the edges. Between the sheet of transparant material and the lay-up a vacuum is applied as the second pressure. The entrapped air is worked out of the material by mechanical means and then removed by the vacuum, upon which the material is cured by means of elevated temperature and the first pressure.

Sandwich panels are construction materials that are frequently applied in all kinds of transporting systems, mainly because they combine the properties of great stiffness and low weight. Examples are floors and walls in airplanes. The facings generally consist of fibre reinforced materials with strong mechanical properties in a longitudinal direction, while the core generally has less strong properties in the longitudinal direction, but has reasonable properties in the normal direction, so as to keep the two facings apart.

To obtain a minimum weight the core of the sandwich panel has a cellular structure in which the cells contain gas, usually air. Examples of such cellular structures are foams and honeycombs.

The disadvantage of applying a process as described in DE-A-3.631.185 to an aminoplast-impregnated honeycomb sandwich panel is that at normal curing temperatures the curing aminoplast starts to foam if put under vacuum. This reduces the strength of the facing of the sandwich and of the adhesion of the facing to the honeycomb structure.

The object of the invention is to provide a process that does not have said disadvantages, or to a less degree.

This is achieved according to the invention in that the second pressure is at least as high as the vapour pressure of water at the curing temperature of the aminoplast.

The first pressure is preferably at least 0.05 bar higher than the second pressure and more preferably the first pressure is at least 1.5 bar higher than the second pressure.

The second pressure of at least the vapour pressure of water at the curing temperature does not prevent the volatiles form evaporizing in the core cells but it does prevent the aminoplast from foaming during the curing process. Thereby the right morphology for convenient adhesive joints is obtained.

Surprisingly, it has been found that, despite the pressure in the moulding during the curing, a so produced sandwich panel, with facings on both sides, when taken from the autoclave, has an approximately atmospheric pressure in the cavities of the honeycomb between the facings. So there are no disruptions on the produced part due to over- or underpressure inside the honeycomb. One would expect that such a hollow structure would be under pressure after cure and therefore would explode after removal of the external pressure.

It is well-known that in the case of laminates the volatile constituents of the resin may evaporize during curing of the resin, thus forming a gaseous phase, dispersed as bubbles, that negatively influences the properties of the laminates.

From GB-A-1.441.919 a process is known to prevent the formation of a gaseous phase in a laminate during cure. Instead of a vacuum, a positive pressure, being in excess of the vapour pressure, is applied under the flexible envelope, thereby preventing the volatiles from boiling off during the cure cycle.

The process according to the invention is essentially different from that as described in GB-A-1.441.919 in that the former allows a gaseous phase to be present in the moulding. The latter aims at obtaining no such gaseous phase, especially in laminates. Alternatively, in the process according to the present invention the pressure difference between the outside and the inside pressure is restricted by the mechanical properties of the core material that is used. Similarly, the inside pressure should not exceed such a level above which the moulded sandwich panel will disrupt after removal of the panel from the autoclave.

The sandwich panel is generally cured at a temperature between 100 and 260°C. Preferably the temperature is between 140 and 160°C.

The second pressure is generally chosen in dependence of the desired curing temperature between 1 and 47 bar, preferably between 3.6-6.1 bar.

The first pressure is chosen in dependence of the second pressure and in dependence of the excess pressure required for adequately compressing the material of the sandwich panel, so that a well united panel is formed. The pressure must preferably be so high that air inclusions between the layers which a facing may consist of are pressed out.

The process according to the invention has as a further advantage that the facings are pressurized from both sides, thereby excluding the entrapped air more severely.

The first pressure must not be too much higher than the second pressure as to cause the honeycomb to collapse.

The maximum differential pressure depends on the type of honeycomb and on the autoclaving conditions and can easily be determined by the person skilled in the art.

The sandwich panel preferably consists of honeycomb as core material and at least one facing, of which at least either the honeycomb or one or more of the facings are impregnated with an aminoplast.

The honeycomb may be any honeycomb. The honeycomb preferably consists of a fibrous or felt-like reinforcing material impregnated with a resin. The resin can be chosen from, for instance, an epoxy resin, an unsaturated polyester, an acrylic acid ester, vinylester resin, polyurea resin, polyesterimide (PEI), polyimide, polyetherimide, polyamideimide (PAI), a polyurethane resin, a phenolic resin or an aminoplast and/or mixtures thereof. The honeycomb is impregnated preferably with an aminoplast. A honeycomb generally has a three-dimensional structure with voids spaced by parallel walls. The voids generally are hexagonal, but they can also be square or triangular or have any other form.

The reinforcing material may consist of, for instance, paper, glass, aramide, polyester, polyimide, polyesterimide, polyetherimide, polyamideimide or polyamide. It is possible also for the honeycomb to consist of a film of a plastic material or of aluminium or of a different metal. This film may optionally be coated with a resin. The resin may optionally be an aminoplast.

The aminoplast may be any aminoplast as described, for instance, in Encyclopedia of Polymer Science and Engineering, Second edition (1985), volume 1, pp. 752-789, Wiley & Son, New York.

Preferably the aminoplast is a melamine-formaldehyde resin with a formaldehyde : melamine molar ratio of between 1.3 and 2.5.

The two facings preferably consist of fibre-reinforced material, which may be the same or different, impregnated with a curable resin. The fibre reinforcement may consist of paper, glass, carbon, aramide, inorganic fibres, thermoplastic fibres, such as polyamide or polyester, rock fibre, cotton, cellulose or jute. The facings may consist also of a film of plastic or of aluminium or a different metal. It is possible to add one or more sheets of a stiffer material to a facing to enhance the surface appearance. If the facing consists for example of several impregnated sheets of paper, it is possible to add in between one or more sheets that are already partly cured. In this way it is possible to avoid that the surface is bent in accordance with the honeycomb surface of ribs and holes.

The facings may be impregnated with, for instance, an epoxy resin, an unsaturated polyester, an acrylic acid ester, a polyurethane, a phenol resin, polycyanurate, polyimide, PAI, PEI, polyetherimide or an aminoplast. The facings are preferably impregnated with an aminoplast, because it is practically non-flammable and can be well coloured.

The viscosity of the resin must be such that facings and honeycomb are firmly connected with each other. To this end, the resin must so flow as to form a bridge between the honeycomb and the facing before the resin reaches the state of a gel. The aminoplast is preferably a melamine-formaldehyde or a phenol-formaldehyde resin. The ratio of, for instance, formaldehyde : melamine (f/m) is normally between 1.3 and 2.5, preferably between 1.5 and 2.0 (mole/mole). Optionally, the melamine can be replaced partly by, for instance, phenol, but this may have negative effects on the colour. Plasticizers, too, may be added, such as sorbitol, $\epsilon$-caprolactam, (poly)ethylene glycol, trioxitol, toluenesulphoneamide and benzo- and acetoguanamine.

The facing or the honeycomb may also contain fillers, such as e.g. lime, clay, carbon, silica or metal particles. They may further contain catalysts, release agents, colourants and other customary additives. The catalysts used may be the customary catalysts such as, for instance, p-toluenesulphonic acid and boric acid.

Mechanical properties of the facing that can be put to good practical use are obtained if 10-50% (wt) fibrous material is applied herein and 90-50% (wt) resin mixture, which resin mixture preferably comprises 0-80% (wt) fillers and 100-20% (wt) aminoplast resin. More specifically 40-50% (wt) fibrous material and 60-50% (wt) resin mixture are used, the resin mixture comprising 0-30% (wt) fillers and 100-70% (wt) resin.

The first pressure is applied by pumping a gas or liquid under pressure into the autoclave. This may be an inert gas, such as nitrogen, but it may also be ordinary air. A liquid may be water, oil and the like. Preference is given to the use of a gas.

The second pressure is applied by pumping a gas under pressure under the flexible material, which gas should preferably be inert under the prevailing curing conditions. The gas is preferably nitrogen.

The autoclave may be any autoclave used. This means that any space in which the pressure and temperature can be set as required can be used. The pressure may be applied by a pump, or otherwise.

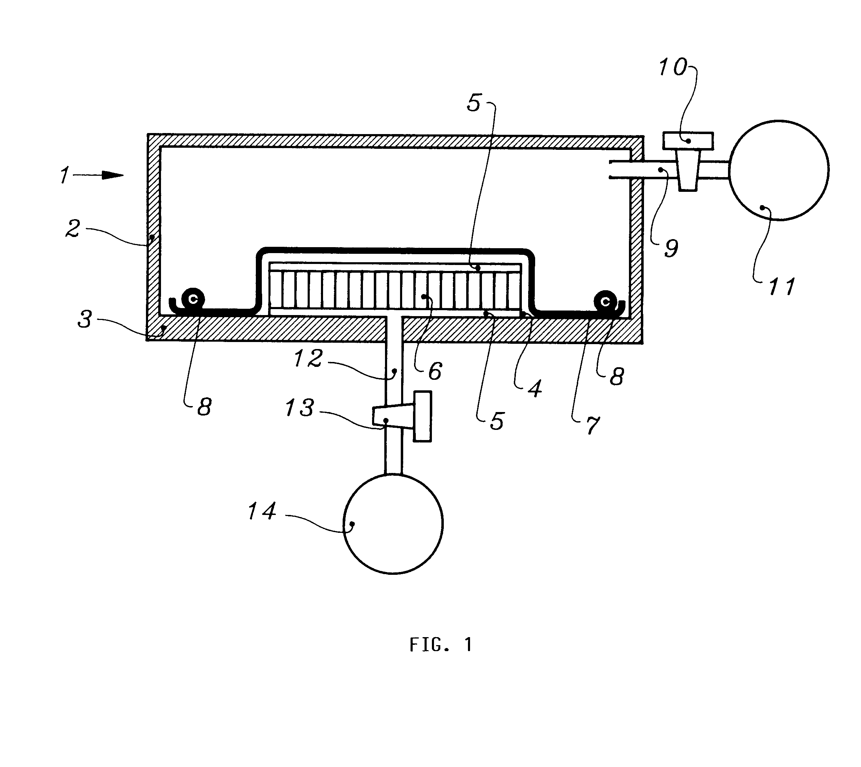

The invention will be elucidated by figure 1 without being limited to the embodiment presented there.

In figure 1, number (1) is a diagrammatic representation of an autoclave with detachable hood (2) and bottom (3). On bottom 3 lies honeycomb sandwich panel (4) consisting of facings (5) and honeycomb (6). The bottom may be replicable. The honeycomb sandwich panel is covered with flexible material (7) sealed at its edges with sealing elements (8) on bottom (3). The space within autoclave (1) can be put under the first pressure via tube (9), which can be closed with valve (10) and which is connected with pump (11). The space under flexible material (7) can be put under the second pressure via tube (12), which can be closed by valve (13) and which is connected with pump (14). Both pumps are connected via non-drawn connections with non-drawn storage vessels filled with inert gas.

Honeycomb sandwich panels made by applying a process according to the invention are particularly suited for use in applications requiring great strength and rigidity in combination with great fire resistance. Examples are aircraft, house building, trains, automotive vehicles and ships.

Further, these panels have good scratch resistance, and good esthetical properties (a.o. colourability).

The aminoplast impregnated laminates have further advantages in that they can easily be prepared; they are non-tacky at room temperature and average humidity, which implies that it is not necessary to use release-foil or other means for separating laminates; they have practically no smell; they do not have an irritating effect on skin; and they can be stored at room temperature.

The invention will be elucidated by the following examples without being limited thereto.

Example I

A honeycomb (Cormaster[R], Schutz-werke GmbH) (96 kg/m$^3$) thickness 3 mm, 3.2 mm, consisting of aramide paper and phenol-formaldehyde resin, was provided on two sides with a facing of 1 ply of glass fabric (300 g/m$^2$) impregnated with 245 g/m$^2$ melamine-formaldehyde resin (f/m = 1.7, modified with 5% (wt) $\epsilon$-caprolactam calculated on the melamine). The curing temperature was 140°C. The second pressure was about 5.0 bar, while the first pressure was about 6.5 bar (5.0 bar is above the vapour pressure of water at 140°C). The curing time was 1.5 hours.

Of the sandwich panel, the properties of peeling strength, tensile strength in normal direction and 4-point flexural strength were measured according to Deutsche Airbus Norm (DAN) 406. The peeling strength is the force required to pull the facing off and to wind it up as described in DAN 406. This was measured for the upper facing and for the lower facing. The upper facing is the facing which is in contact with the flexible sheet, while the lower facing is in contact with a part of the autoclave. The results are shown in table I.

Table I

| Properties of honeycomb sandwich panel | | |
|---|---|---|
| | norm | measured value |
| peeling strength (N) upper facing | 40 | 67 |
| lower facing | 40 | 170 |
| tensile strength (N/mm$^2$) | 1.0 | 2.5 |
| flexural strength (N) | 420 | 850 |

The norm is according to DAN 1001.2. The measurement is according to DAN 406.

The panel was also tested according to fire/smoke/toxicity tests according to ATS 1000.001 and FAR 25.853(a). The results showed that the sandwich panel complies with the DAN 1001.2 standard for panels from E-glass fabrics with phenolic resin.

Comparative experiment A

A honeycomb (46 kg/m$^3$, thickness 18 mm, section of cell 5 mm) consisting of kraft paper impregnated with phenol-formaldehyde resin was provided on its top and its bottom with 2 layers each of glass fabric (300 g/m$^3$) impregnated with an identical melamine-formaldehyde resin as in Example I. The sandwich was cured at 150°C for 45 minutes. The second pressure was 0.7 bar, i.e. below the vapour pressure of water at 150°C. The first pressure was 4.0 bar. The sandwich panel was found to be compressed in horizontal as well as in vertical direction. At the same time, (slight) foaming was found to have taken place.

Comparative experiment B

A honeycomb (24 kg/m$^3$, thickness 9 mm, section of cell 3.2 mm) of aramide paper was impregnated with melamine-formaldehyde resin. The honeycomb was provided on its top and bottom with eight layers each of glass fabric (60 g/m$^2$) impregnated with melamine-formaldehyde resin. The sandwich panel was cured for 30 minutes at 160°C. The second pressure was atmospheric pressure, i.e. below the vapour pressure of water at 160°C. The first pressure was 2.0 bar.

The sandwich panel showed foamed melamine-formaldehyde resin in the cells. The adhesion of the facings to the core was poor and delamination occurred between the layers of glass fibre. The facing could be removed from the honeycomb with little force.

**Claims**

1. Process for making an aminoplast-impregnated sandwich panel consisting of a honeycomb and at least one facing by means of an autoclave, whereby at least one of the honeycomb and facing is impregnated with aminoplast and the sandwich panel is placed in an autoclave under a sheet of flexible material, which flexible material is at least partially gas tight and is sealed at its edges, over which flexible material a first pressure is applied and under which flexible material a second pressure is applied, that is lower than the first pressure, characterized in that the second pressure is at least as high as the vapour pressure of water at the curing temperature of the aminoplast.

2. Process according to claim 1, characterized in that the first pressure is at least 0.05 bar higher than the second pressure.

3. Process according to claim 2, characterized in that the first pressure is at least 1.5 bar higher than the second pressure.

4. Process according to any one of claims 1-3, characterized in that the resin is cured at a temperature between 100 and 260°C.

5. Process according to claim 4, characterized in that the resin is cured at a temperature between 140 and 160°C.

6. Process according to any one of claims 1-5, characterized in that the second pressure is between 1 and 47 bar.

7. Process according to claim 6, characterized in that the second pressure is between 3.6 and 6.1 bar.

8. Process according to any one of claims 1-5, characterized in that the honeycomb is impregnated with an aminoplast.

9. Process according to any one of claims 1-8, characterized in that the facings consist of a fibrous or felt-like material impregnated with an aminoplast.

10. Process according to any one of claims 1-9, characterized in that the aminoplast is a melamine-formaldehyde resin with a formaldehyde : melamine molar ratio of between 1.3 and 2.5.

11. Process according to any one of claims 1-10, characterized in that the facing contains 10-50% (wt) fibrous material and 90-50% (wt) resin, the resin containing 0-80% (wt) of one or more fillers.

12. Process according to claim 11, characterized in that the facing contains 40-50% (wt) fibrous material and 60-50% (wt) resin, the resin containing 0-30% (wt) of one or more fillers.

13. Sandwich panel obtained by applying the process according to any one of claims 1-12.

FIG. 1

European
Patent Office

**EUROPEAN SEARCH
REPORT**

Application Number

**EP 91 20 2193**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | DE-A-3 631 185 (STEFFENS)<br>– – – | 1-13 | B 29 C 67/14<br>B 29 C 43/12 |
| D,Y | GB-A-1 441 919 (KAWKER SIDDELEY)<br>* page 1, line 29 - page 1, line 40 * * * page 1, line 60 - page 1, line 70 * *<br>– – – | 1-13 | |
| A | WO-A-8 604 018 (AVIONS MARCEL DASSAULT-BREGUET AVIATION)<br>– – – | 1-13 | |
| A | FR-A-2 459 118 (SOCIETE NATIONALE DES POUDRES ET EXPLOSIFS)<br>– – – | 1-13 | |
| A | EP-A-0 208 227 (BASF AG)<br>– – – | 1 | |
| D,A | I.H.UPDEGRAFF 'ENCYCLOPEDIA OF POLYMER SCIENCE AND ENGINEERING,2ND EDITION,VOLUME 1.' 1985 , WILEY AND SON , NEW YORK AMINO RESINS<br>* page 752 - page 789 * *<br>– – – | 1 | |
| A | US-A-4 151 141 (DOW CHEMICAL)<br>– – – – – | 1 | |

TECHNICAL FIELDS
SEARCHED (Int. Cl.5)

B 29 C
C 08 F
E 04 B
B 32 B

The present search report has been drawn up for all claims

| Place of search | Date of completion of search | Examiner |
|---|---|---|
| The Hague | 19 December 91 | ROBERTS P.J. |